# Europäisches Patentamt

## European Patent Office

## Office européen des brevets

(19)

(11) Veröffentlichungsnummer: **0 080 208 A2**

(12) # EUROPÄISCHE PATENTANMELDUNG

(21) Anmeldenummer: 82110840.4

(51) Int. Cl.³: **F 24 J 3/02**

(22) Anmeldetag: 23.11.82

(30) Priorität: 25.11.81 DE 3146659

(43) Veröffentlichungstag der Anmeldung: 01.06.83 Patentblatt 83/22

(84) Benannte Vertragsstaaten: DE FR

(71) Anmelder: Gebrüder Uhl GmbH & Co KG, Bergstrasse 17, D-7981 Vogt bei Ravensburg (DE)

(72) Erfinder: Möller, Rolf W, Dr. Ing. Dipl.-Ing., Epplingser Halde 14, D-7988 Wangen / Allg. (DE)
Erfinder: Hirscher, Gerhard, Dipl.-Ing., Hochsträss 6, D-7981 Vogt (DE)
Erfinder: Bopp, Erich, Ziegelstrasse 3, D-7981 Vogt (DE)

(74) Vertreter: Engelhardt, Guido, Dipl.-Ing., Ehlersstrasse 17 Postfach 1350, D-7990 Friedrichshafen (DE)

(54) Einrichtung zur Übertragung von Wärmeenergie.

(57) Bei einer Einrichtung zur Übertragung von Wärmeenergie zwischen einem diese durchströmenden Wärmeträgermedium und der Atmosphäre, bei der die Absorberprofile (16), die mindestens einen abgeschlossenen Kanal (31) und eine oder mehrere Lamellen (32, 33) aufweisen, jeweils an ein Sammelrohr (12) zur Zuleitung und an ein Sammelrohr (13) zur Ableitung des Wärmeträgermediums angeschlossen sind, sind die Sammelrohre (12, 13) über Eckanschlußelemente (20) mit vorzugsweise im Querschnitt gleichgestalteten Verbindungsrohren (14, 15) zu einem geschlossenen flüssigkeitsdichten und von dem Wärmeträgermedium durchströmbaren Rahmen (11) zusammengesetzt.

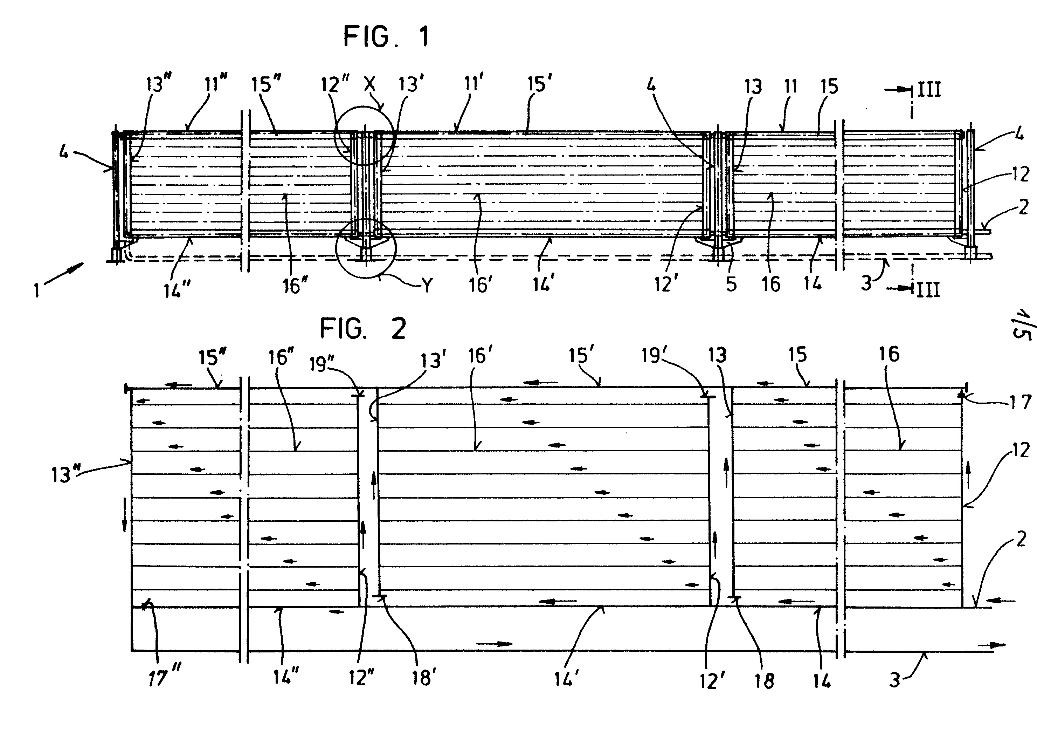

Durch diese Ausgestaltung ist in Verbindung mit weiteren Maßnahmen nicht nur eine einfache Befestigung der Absorberprofile (16) an den Sammelrohren (12, 13) gegeben, sondern es sind auch optimale Strömungsverhältnisse zu erzielen, da auch bei einem Verbund mehrerer Einrichtungen nahezu überall der gleiche Druck vorherrscht, so daß eine günstige Wärmezufuhr und Wärmeabfuhr gewährleistet ist (Fig. 2).

Gebrüder Uhl GmbH & Co KG
7981 Vogt b.Ravensburg

Einrichtung zur Übertragung von Wärmeenergie

Die Erfindung bezieht sich auf eine Einrichtung zur Übertragung von Wärmeenergie zwischen einem diese durchströmenden Wärmeträgermedium und der diese umgebenden Atmosphäre, insbesondere Solarabsorber, mit einem oder mehreren Absorberprofilen, die jeweils mindestens einen abgeschlossenen Kanal und eine oder mehrere wärmeabgebende oder wärmeaufnehmende, oberflächenvergrößerende Lamellen aufweisen, wobei die Kanäle der Absorberprofile im Bereich der beiden Enden an ein Sammelrohr zur Zuleitung und an ein Sammelrohr zur Ableitung des Wärmeträgermediums anschließbar sind.

Durch das DE-GM 8o o7 436 ist eine Einrichtung zur Übertragung von Wärmeenergie dieser Art bekannt. Die Sammelrohre sind bei diesem Absorber mit in Längsrichtung verlaufenden Einschubkanälen versehen, in die mit den Absorberprofilen verbundene Halteleisten einsetzbar sind. Auf diese Weise können zwar die Absorberprofile an beliebigen Stellen an die Sammelrohre angeschlossen werden, die Ausgestaltung der Anschlüsse sowie das Anschließen eines Absorberprofils an ein Sammelrohr sind jedoch aufwendig. Vor allem aber ist hierbei von Nachteil, daß optimale Strömungsverhältnisse, insbesondere bei einem Verbund mehrerer solcher Einrichtungen nicht zu erzielen sind,

./.

da die beiden Sammelrohre einer Einrichtung einen Ausgleich von Druckdifferenzen durch entsprechende Rohrführungen nicht gestatten und zusätzliche Rohrleitungen somit unumgänglich sind.

Es ist daher Aufgabe der Erfindung, eine Einrichtung zur Übertragung von Wärmeenergie der vorgenannten Art zu schaffen, bei der nicht nur gegenüber der bekannten Ausgestaltung eine einfachere Montage der Absorberprofile ermöglicht wird, sondern bei der auch optimale Strömungsverhältnisse, insbesondere bei einem Verbund mehrerer Einrichtungen, aufgrund nahezu überall gleicher Drücke zu erzielen sind. Außerdem soll der Bauaufwand verringert und die Handhabung erleichtert werden.

Gemäß der Erfindung wird dies bei einer Einrichtung zur Übertragung von Wärmeenergie dadurch erreicht, daß die die Absorberprofile tragenden Sammelrohre über Eckanschlußelemente mit vorzugsweise im Querschnitt gleich gestalteten Verbindungsrohren zu einem geschlossenen flüssigkeitsdichten und von dem Wärmeträgermedium durchströmbaren Rahmen zusammengesetzt sind.

Die Kanäle der Absorberprofile können hierbei derart an die Sammelrohre angeschlossen werden, daß die Summe aus Zulauf und Rücklauf für jedes Absorberprofil eines Rahmens etwa gleich groß ist.

Bei einem Verbund mehrerer Rahmen sollte, um günstige Strömungsverhältnisse zu erreichen, das Sammelrohr für den Zulauf des ersten Rahmens mit einer Drossel und das Sammelrohr der nachfolgenden Rahmen mit einer Verschlußkappe versehen sein, die jeweils vor dem Anschluß an das Verbindungsrohr angeordnet sind. Des weiteren sollte in das Sammelrohr für den Rücklauf zwischen dem Anschluß an eines der Verbindungsrohre und dem ersten durchströmten Kanal eines Absorberprofiles eine Verschlußkappe eingesetzt sein.

0080208

Nach einem andersartigen Flußplan können die Kanäle der
Absorberprofile  aber auch derart an die Sammelrohre angeschlossen werden, daß der Zulauf und der Rücklauf in den
Sammelrohren für einen Kanal eines Absorberprofiles  jeweils
gleich lang ist. Ein in dieser Weise geschalteter Rahmen
wird zweckmäßigerweise als letzter Rahmen eines Verbundes verwendet.

Bei einem Verbund mehrerer Rahmen ist es ferner angebracht,
das Ende des Sammelrohres für den Zulauf des letzten Rahmens
vor dem Anschluß an das an diesem befestigten Verbindungsrohr mit einer Verschlußkappe zu versehen.

In vorteilhafter Weise können mehrere mit Absorberprofilen
bestückte Rahmen nach Art eines Energiezaunes miteinander
verbunden werden, wobei die Verbindungsrohre des zweiten und
der folgenden Rahmen jeweils als Zuführungsleitung für den
nachfolgenden Rahmen und als Rücklaufleitung für den vorhergehenden Rahmen geschaltet sind.

Der durch die Sammelrohre und die Verbindungsrohre gebildete Rahmen kann in einfacher Weise als rechteckiger, selbsttragender Rahmen ausgebildet sein, in den die Absorberprofile  etwa parallel zu den Verbindungsrohren verlaufend
in waagrechter oder senkrechter Anordnung eingesetzt sind.

Zur Vergrößerung der Oberfläche sollten auch die Sammelrohre
und die Verbindungsrohre mit abstehenden Lamellen oder Stegen,
vorzugsweise jeweils mit zwei parallel zueinander verlaufenden,
U-förmig ausgebildeten und in Richtung der an diese angeschlossenen Absorberofilen offene Lamellen versehen sein.

Zur Befestigung der Absorberprofile  an den Sammelrohren kann
auf deren Außenseite eine in Längsrichtung verlaufende plane,
vorzugsweise parallel zu einer Lamelle verlaufende Anlagefläche angeformt sein, die beidseitig von winkelförmig

./.

ausgebildeten, vorzugsweise durchgehenden Stegen begrenzt
ist. Zum flüssigkeitsdichten Anschließen der Kanäle der
Absorberprofile an die Sammelrohre kann jeweils ein in
diese einsetzbares, an deren Anlageflächen dichtend anliegendes Verbindungsstück vorgesehen werden, das einen
Andruckflansch aufweist, der in die durch die winkelförmigen Stege gebildete Nut einführbar ist und die Stege
hintergreift, wobei der Andruckflansch mit in Richtung
der Lamellen der Absorberprofile abstehenden Nocken versehen ist, die zur Verdrehsicherung der Verbindungsstücke
zwischen die Lamellen eingreifen.

Zweckmäßig ist es hierbei, die Absorberprofile axial verschiebbar auf den in deren Kanäle eingreifende Verbindungsstücke zu halten und zur flüssigkeitsdichten Verbindung in
die Verbindungsstücke O-Ring-Dichtungen einzusetzen, so daß
Längenänderungen der Absorberprofile leicht auszugleichen
sind.

Des weiteren sollten die Absorberprofile verdrehfest mit
den Sammelrohren verbunden sein. Dies ist in einfacher
Weise dadurch zu bewerkstelligen, indem die Lamellen der
Absorberprofile in an den Sammelrohren angeformte U-förmig
ausgestaltete Lamellen eingreifen und mit ihren vorzugsweise mit abgewinkelten Stegen versehenen Enden an diesen anliegen.

Die Eckanschlußelemente sind als symmetrische mit Anschlußstutzen versehene Winkelstücke auszubilden, an deren einen
Außenseite ein in Achsrichtung eines Stutzens verlaufendes
Anschlußstück zur Verbindung zweier Rahmen oder zum Anschluß von Zu- oder Rückführungsleitungen angeformt ist.

Außerdem sollten die Sammelrohre und/oder die Verbindungsrohre formschlüssig mit den Eckanschlußelementen, beispielsweise mittels diese durchgreifender Stifte, mittels

./.

Sicken,Verschraubungen od.dgl. verbunden sein und die Eckverbindungselemente sollten an den Enden der Stutzen einen
abgesetzten, mit einer Ringnut versehenen Bund aufweisen,
auf den im Querschnitt C-förmig ausgebildete, scheibenförmige Verschlußkappen oder Drosseln aufsetzbar und arretierbar sind. Des weiteren können die Eckanschlußelemente mittels in deren Stutzen eingesetzter O-Ring-Dichtungen flüssigkeitsdicht mit den Sammelrohren,den Verbindungsrohren
und/oder den Zu- und Rücklaufleitungen verbunden werden.

Bei Anordnung der Rahmen in Form eines Zaunes ist es angebracht, deren unteren Verbindungsrohre jeweils auf einer
an einem Tragelement gehaltenen, vorzugsweise höhenverstellbar befestigten und die Verbindungsrohre seitlich umgreifende Konsole abzustützen und zur seitlichen Halterung eines
Rahmens an dem Tragelement Führungsplatten anzubringen, durch
die jeweils die oberen Eckverbindungselemente seitlich abgestützt sind. Des weiteren sollte hierbei in die Verbindungsleitung zweier Rahmen ein Längenausgleichselement eingesetzt
sein, das mit den Anschlußstücken der Eckanschlußelemente
flüssigkeitsdicht verbunden ist,und die Zwischenräume zwischen zwei aneinanderstoßender Rahmen sollten durch eine auf
deren oberen Verbindungsrohren von oben aufrastbaren oder
aufschraubbaren U-förmig ausgebildete Abdeckung abgedeckt
sein.

Eine gemäß der Erfindung ausgebildete Einrichtung zur Übertragung von Wärmeenergie ist nicht nur einfach in der konstruktiven Ausgestaltung und damit wirtschaftlich in der Herstellung, sondern es sind auch optimale Strömungsverhältnisse und damit eine günstige Wärmezu- und -abführung zu erzielen.
Werden nämlich die Sammelrohre mit Verbindungsrohren zu einem
geschlossenen Rahmen, in dem die Absorberprofile gehalten
sind, zusammengesetzt, so ist es ohne weiteres möglich, die einzelnen Absorberprofilen derart an die Sammelrohre anzuschließen, daß die Widerstände der jeweiligen Flüssigkeitskreisläufe nahezu gleich und die Strömungsverhältnisse und
damit der Wärmeübergang demnach überall gleich gut sind.

Der dazu erforderliche Bauaufwand ist gering, zumal gegenüber den herkömmlichen Ausgestaltungen außen verlegte Rohrleitungen mit Abzweigungen nicht mehr notwendig sind. Auch
ist die Verrohrungsinstallation einfach vorzunehmen. Bei
mehreren zu einem Energiezaun zusammengeschalteter Rahmen
beispielsweise sind lediglich diese über Ausgleichselemente
miteinander zu verbinden und die beiden Endanschlüsse sind
anzubringen.

Die Befestigung der Absorberprofile an den Sammelrohren
wird mit Hilfe der Verbindungsstücke vorgenommen, ohne daß
es dazu Schrauben bedarf. Dennoch sind die Absorberprofile
verdrehfest gehalten und unterschiedliche Längenänderungen
werden leicht ausgeglichen. Die Montage und Demontage einer
Einrichtung wie auch der Verbund mit weiteren Einrichtungen
ist somit einfach zu bewerkstelligen.

In der Zeichnung sind ein Ausführungsbeispiel eines aus
mehreren Einrichtungen zur Übertragung von Wärmeenergie
bestehenden Energiezaunes sowie Einzelheiten der Einrichtungen dargestellt und nachfolgend erläutert.
Hierbei zeigen:

Fig. 1          einen aus drei aneinander angeschlossenen
                Einrichtungen bestehenden Energiezaun,

Fig. 2          den Flußplan des Energiezaunes nach Fig. 1,

Fig. 3     einen Schnitt nach der Linie III-III der
Fig. 1,

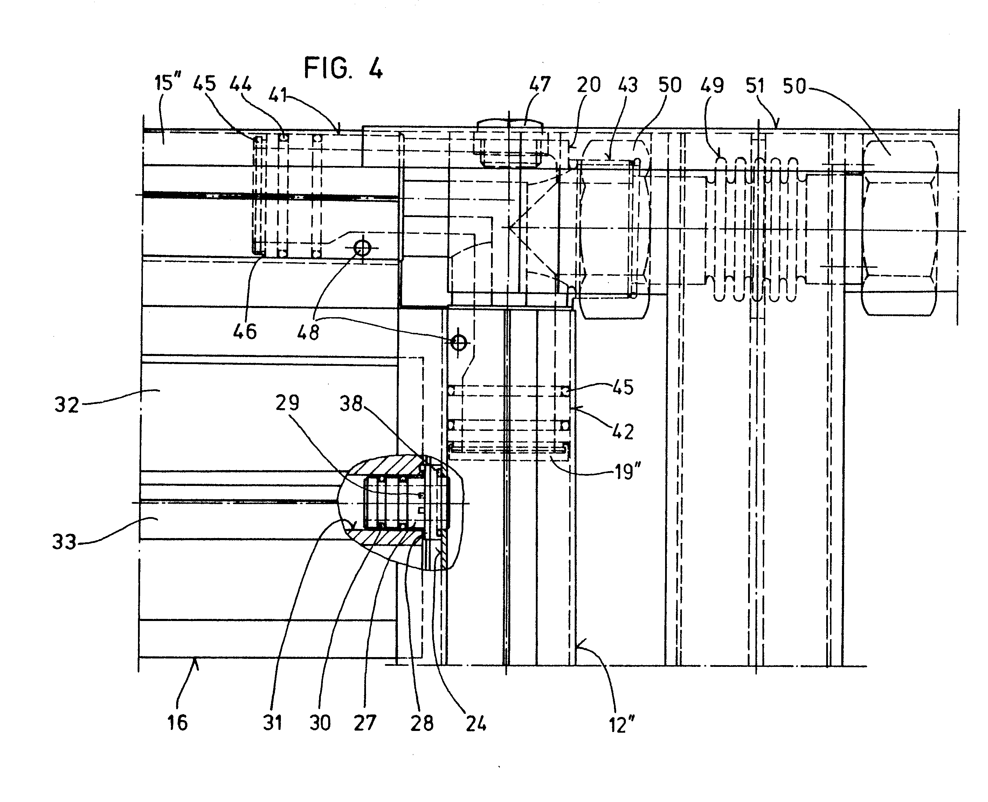

Fig. 4     die in Fig. 1 mit X gekennzeichnete Einzelheit
in einer vergrößerten Darstellung und teilweise
im Schnitt,

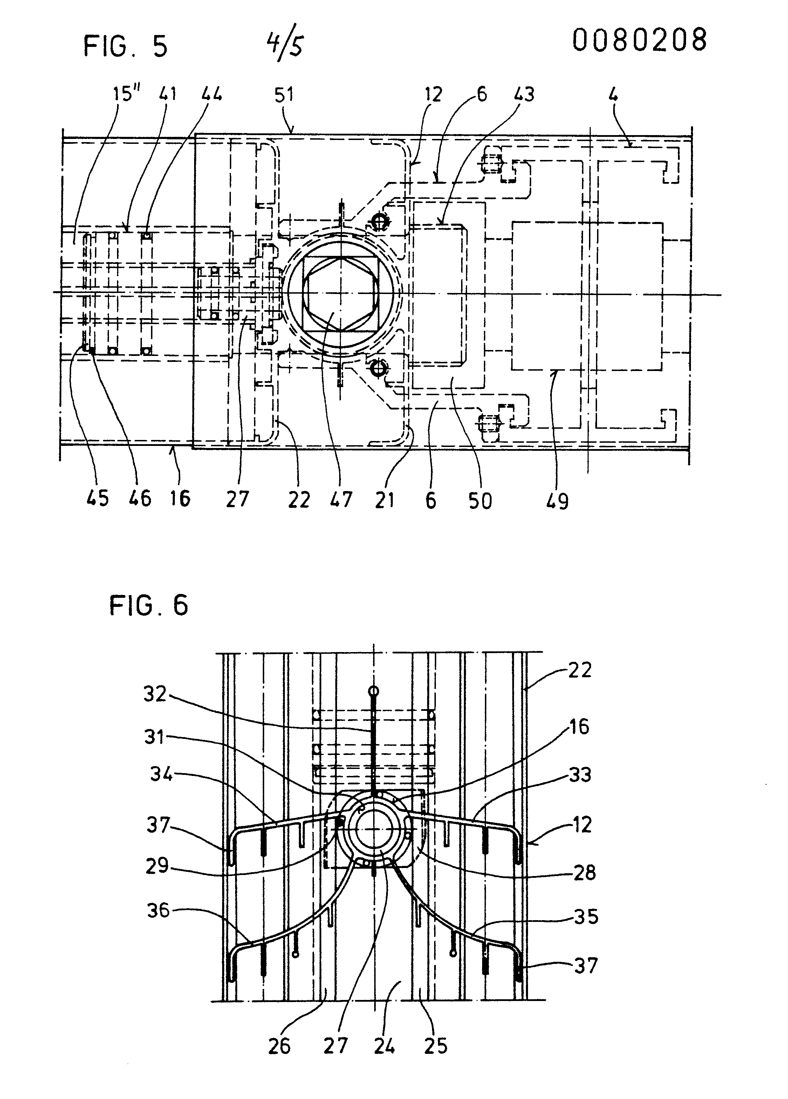

Fig. 5     die Einzelheit nach Fig. 4 in Draufsicht,

Fig. 6     einen achssenkrechten Schnitt durch ein Absorberprofile    und

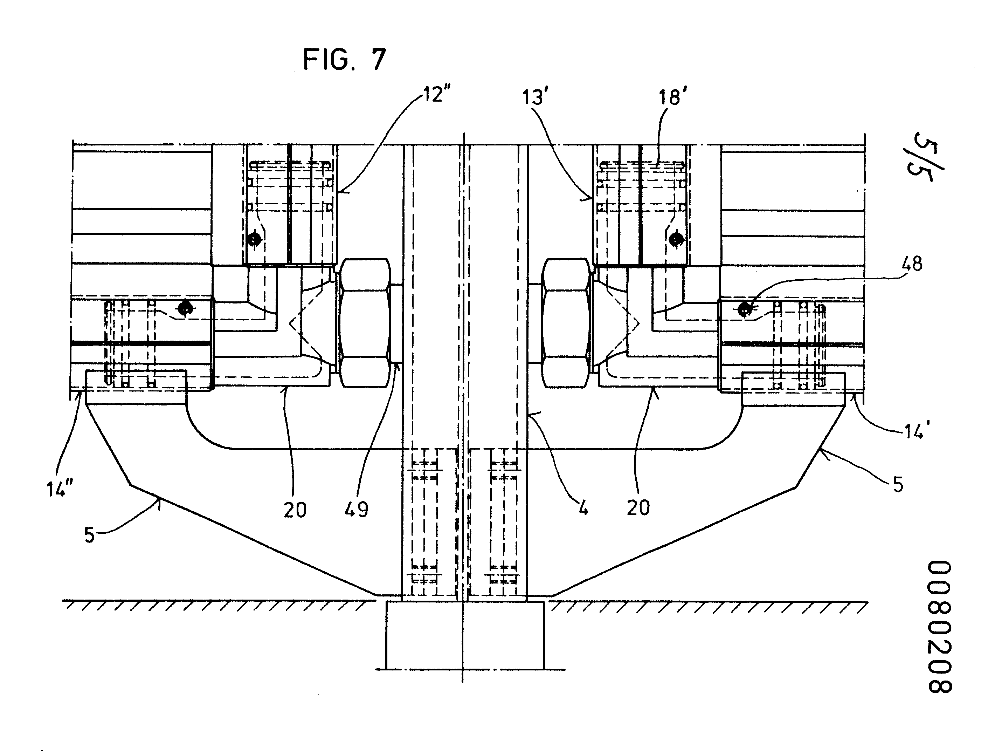

Fig. 7     die in Fig. 1 mit Y gekennzeichnete Einzelheit
in einer vergrößerten Darstellung.

Der in Fig. 1 dargestellte und mit 1 bezeichnete Energiezaun
besteht aus drei aneinander angeschlossenen Einrichtungen zur
Übertragung von Wärmeenergie zwischen einem strömenden Wärmeträgermedium und der Atmosphäre, wobei die Einrichtungen jeweils aus in einem rechteckigen Rahmen 11 eingesetzte Absorberprofile 16 gebildet sind. Die Rahmen 11, 11' und 11'' sind hierbei aus Sammelrohren 12, 12' und 12'' für die Zuleitung und
Sammelrohren 13, 13' und 13'' für die Ableitung des Wärmeträgermediums sowie Verbindungsrohren 14 und 15 zusammengesetzt, die
über Eckverbindungselemente 2o flüssigkeitsdicht miteinander
verbunden sind. Die auf diese Weise selbsttragend gestalteten
Rahmen 11, 11' und 11'' sind an Stützen 4 gehalten, und zwar
dienen dazu höhenverstellbar an diesen befestigte Konsolen 5,
die die unteren Verbindungsrohre 14, 14' und 14'' aufnehmen
sowie Führungsplatten 6, die die in die oberen Verbindungsrohre
15, 15' und 15'' eingesetzten Eckverbindungselemente seitlich
abstützen.

./.

Die Absorberprofile 16 und 16' der beiden Rahmen 11 und 11',
denen das Wärmeträgermedium über eine Leitung 2 zuströmt, sind,
wie sich dies insbesondere aus dem Flußplan nach Fig. 2 ergibt, in der Weise an die Sammelrohre 12, 13 bzw. 12', 13' angeschlossen, daß die Summe aus Zulaufleitung und Ablaufleitung
eines jeden Absorberprofiles gleich groß ist. Dazu ist am Ende
des Sammelrohres 12 eine Drossel 17 und am Ende des Sammelrohres 12' eine Verschlußklappe 19' angebracht, außerdem sind
die Sammelrohre 13 und 13' nicht an die Verbindungsrohre 14
und 14' angeschlossen, indem die jeweiligen Eckverbindungselemente mit Verschlußkappen 18 bzw. 18' versehen sind.

Die Verbindungsrohre 14 und 14' bilden somit die Zulaufleitung für den Rahmen 11'', dessen Absorberprofile 16'' derart an die Sammelrohre 12'' und 13'' angeschlossen sind, daß
der Zulauf und der Rücklauf in den Sammelrohren für ein Absorberprofil jeweils gleich lang ist. Das Sammelrohr 12'' ist
dazu am Ende mit einer Drossel 19'' verschlossen. Auf diese
Weise ergeben sich optimale Strömungsverhältnisse und eine
gute Energieaufnahme in den Absorberprofilen 16, 16' und 16''.
Über eine an das Sammelrohr 13'' des Rahmens 11'' angeschlossene Rücklaufleitung 3 wird das Wärmeträgermedium zu einer
nicht dargestellten Wärmepumpe oder einer sonstigen Vorrichtung zurückgeführt.

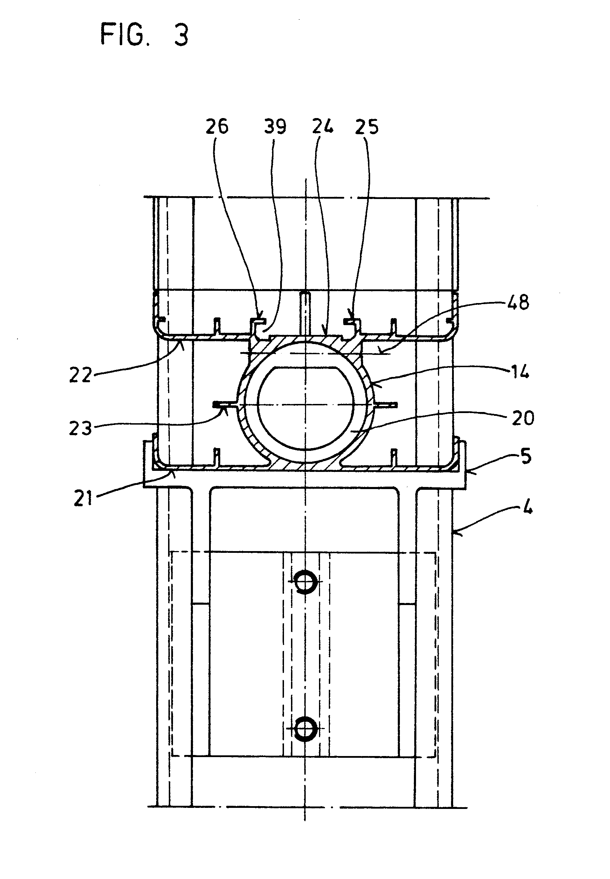

Die Sammelrohre 12 und 13 sowie die Verbindungsrohre 14 und
15 sind im Querschnitt gleich gestaltet, so daß eine rationelle Fertigung gegeben ist und, wie dies in Fig. 3 gezeigt
ist, zur Vergrößerung der Oberfläche mit angeformten Lamellen
21 und 22 sowie abstehenden Stegen 23 versehen. Die Lamellen
21 und 22 sind hierbei U-förmig nach innen offen ausgebildet.
Auf diese Weise können die Konsolen 5 die Lamellen 21 der
Verbindungsrohre 14 umgreifen und durch die Lamellen 22 der
Sammelrohre 13 und 14 sind die Absorberprofile 16 verdrehfest gehalten.

Auf der nach innen gerichteten Seite der Sammelrohre 12 und 13 ist des weiteren eine plane Anlagefläche 24 vorgesehen, die von zwei winkelig ausgebildeten Stegen 25 und 26 begrenzt ist, die somit eine Aufnahmenut 39 bilden. Mit Hilfe von Verbindungsstücken 27, die in in das Sammelrohr 12 bzw. 13 einzuarbeitende Bohrungen einzusetzen sind, sind die Absorberprofile 16, die aus einem Kanal 31 und an diesen angeformten Lamellen 32, 33, 34, 35 und 36 bestehen, leicht zu befestigen. Die Verbindungsstücke 27 weisen nämlich einen Andruckflansch 28 auf, der in die Aufnahmenut 39 eingedreht werden kann. Mittels einer Dichtung 38, die an der Anlagefläche 24 anliegt, sowie in die Verbindungsstücke 27 eingesetzter O-Ring-Dichtungen 3o ist eine flüssigkeitsdichte Verbindung geschaffen.

Der Andruckflansch 28 ist des weiteren mit in Richtung des Absorberprofils 16 abstehender Nocken 29 ausgestattet, die, wie dies der Fig. 6 entnommen werden kann, zwischen die Lamellen 32, 33, 34, 35 und 36 eingreifen. Außerdem sind die Lamellen 33, 34, 35 und 36 an ihren Enden mit abgewinkelten Stegen 37 versehen, die in die U-förmigen Lamellen 22 der Sammelrohre 12 und 13 eingreifen. Durch diese Ausgestaltung sind die Absorberprofile 16 verdrehfest in den Sammelrohren 12 und 13 und die Verbindungsstücke 27 verdrehfest mit den Absorberprofilen 16 verbunden, so daß, obwohl für den Anschluß der Absorberprofile 16 an die Sammelrohre 12 und 13 keine Schrauben benötigt werden, dennoch eine sichere Befestigung gegeben ist. Und da die Absorberprofile 16 verschiebbar aber flüssigkeitsdicht auf den Verbindungsstücken 27 gehalten sind, können auch Längenänderungen ausgeglichen werden.

Die Eckverbindungselemente 2o, mittels denen die Sammelrohre 12 und 13 mit den Verbindungsrohren 14 und 15 flüssigkeitsdicht zu dem Rahmen 11 zusammengesetzt sind, sind symmetrisch ausgebildet und weisen jeweils zwei Anschlußstutzen 41 und
42 auf, die in eines der Sammelrohre und der Verbindungsrohre eingreifen. Mit Hilfe von Stiften 48 sind die jeweiligen Sammel- und Verbindungsrohre fest an einem Eckverbindungselement arretiert. An den Enden sind die Anschlußstutzen 41 und 42, in die ebenfalls O-Ring-Dichtungen 44
eingesetzt sind, mit einem abgesetzten Bund 45 und einer
Nut 46 ausgestattet, so daß auf diese leicht scheibenförmige Drosseln oder Verschlußkappen aufgerastet werden können. Außerdem ist das in Fig. 4 dargestellte Eckverbindungselement 2o mit einem Entlüftungsstopfen 47 ausgestattet.

Zur Verbindung einzelner Rahmen miteinander oder zum Anschluß von Zu- oder Rücklaufleitungen sind die Eckverbindungselemente 2o auf einer Außenseite des weiteren mit einem
mit dem Anschlußstutzen 41 etwa fluchtenden Ansatzstück 43 versehen, an das mit Hilfe einer Mutter 5o ein Ausgleichselement 49 oder eine andere Leitung zu befestigen ist. Und der
Zwischenraum zwischen zwei Rahmen ist durch eine auf deren
Verbindungsrohre 14 von oben aufrastbare Abdeckung 51 abgedeckt.

Die Montage eines Rahmens 11, der eine Einrichtung zur Übertragung von Wärmeenergie von einem in den Sammelrohren 12
und 13, den Verbindungsrohren 14 und 15 sowie den Absorberprofilen 16 strömenden Wärmeträgermedium bildet, ist aufgrund
dieser Ausgestaltung äußerst einfach und in kurzer Zeit vorzunehmen. Außerdem sind ohne Schwierigkeiten und ohne zusätzlichen Bauaufwand mehrere Rahmen zu einem Energiezaun,
der optimale Strömungsverhältnisse und damit einen guten
Wärmeübergang aufweist, miteinander verbindbar.

A 8768 e-s
17. November 1981

0080208

Gebrüder Uhl GmbH & Co KG
7981 Vogt b.Ravensburg

P a t e n t a n s p r ü c h e :

1. Einrichtung zur Übertragung von Wärmeenergie zwischen
   einem diese durchströmenden Wärmeträgermedium und der
   diese umgebenden Atmosphäre, insbesondere Solarabsorber,
   mit einem oder mehreren Absorberprofilen, die jeweils
   mindestens einen abgeschlossenen Kanal und eine oder
   mehrere wärmeabgebende oder wärmeaufnehmende,oberflächenvergrößernde Lamellen aufweisen, wobei die Kanäle
   der Absorberprofile im Bereich der beiden Enden an ein
   Sammelrohr zur Zuleitung und an ein Sammelrohr zur Ableitung des Wärmeträgermediums anschließbar sind,

   d a d u r c h   g e k e n n z e i c h n e t ,

   die
   daß die Absorberprofile (16) tragenden Sammelrohre
   (12, 13) über Eckanschlußelemente (2o) mit vorzugsweise

                                                    ./.

- 2 -

im Querschnitt gleich gestalteten Verbindungsrohren
(14, 15) zu einem geschlossenen flüssigkeitsdichten
und von dem Wärmeträgermedium durchströmbaren Rahmen
(11) zusammengesetzt sind.

2. Einrichtung nach Anspruch 1,

   d a d u r c h   g e k e n n z e i c h n e t ,

   daß die Kanäle der Absorberprofile (16, 16') derart
   an die Sammelrohre (12, 13 bzw. 12', 13) angeschlossen sind, daß die Summe aus Zulauf und Rücklauf für jedes Absorberprofil (16, 16') eines Rahmens (11, 11')
   etwa gleich groß ist.

3. Einrichtung nach Anspruch 2,

   d a d u r c h   g e k e n n z e i c h n e t ,

   daß bei einem Verbund mehrerer Rahmen (11, 11') das
   Sammelrohr (12) für den Zulauf des ersten Rahmens (11)
   mit einer Drossel (17) und das Sammelrohr (12') der
   nachfolgenden Rahmen (11') mit einer Verschlußkappe (19)
   versehen ist, die jeweils vor dem Anschluß an das Verbindungsrohr (15, 15') angeordnet sind.

4. Einrichtung nach Anspruch 2 oder 3,

   d a d u r c h   g e k e n n z e i c h n e t ,

   daß in das Sammelrohr (13, 13') für den Rücklauf zwischen
   dem Anschluß an eines der Verbindungsrohre (14, 14') und
   dem ersten durchströmten Kanal (31) eines Absorberpro-
   files(16, 16') eine Verschlußklappe (18, 18'') eingesetzt
   ist.

   ./.

5. Einrichtung nach Anspruch 1,

   d a d u r c h   g e k e n n z e i c h n e t ,

   daß die Kanäle (31) der Absorberprofile (16'') derart
   an die Sammelrohre ( 12'', 13'') angeschlossen sind,
   daß der Zulauf und der Rücklauf in den Sammelrohren
   (12'', 13'') für einen Kanal (31) eines Absorberprofiles (16'') jeweils gleich lang ist.

6. Einrichtung nach Anspruch 5,

   d a d u r c h   g e k e n n z e i c h n e t ,

   daß bei einem Verbund mehrerer Rahmen (11', 11'') das
   Ende des Sammelrohres (12'') für den Zulauf des letzten
   Rahmens (11'') vor dem Anschluß an das an diesem befestigte das Wärmeträgermedium des vorhergehenden Rahmens (11') aufnehmende Verbindungsrohr (15'') mit einer
   Verschlußkappe (19'') versehen ist.

7. Einrichtung nach einem oder mehreren der
   Ansprüche 1 bis 6,

   d a d u r c h   g e k e n n z e i c h n e t ,

   daß mehrere mit Absorberprofilen (16, 16', 16'') bestückte Rahmen nach Art eines Energiezaunes miteinander verbunden sind, wobei die Verbindungsrohre (14',15')
   des zweiten und der folgenden Rahmen (11') jeweils als
   Zuführungsleitung für den nachfolgenden Rahmen (11'')
   und als Rücklaufleitung für den vorhergehenden Rahmen
   (11) geschaltet sind.

./.

8. Einrichtung nach einem oder mehreren der
Ansprüche 1 bis 7,

d a d u r c h   g e k e n n z e i c h n e t ,

daß der durch die Sammelrohre (12, 13) und die Verbindungsrohre (14, 15) gebildete Rahmen (11) als rechteckiger, selbsttragender Rahmen ausgebildet ist, in
den die Absorberprofile (16) etwa parallel zu den
Verbindungsrohren (14, 15) verlaufend in waagrechter
oder senkrechter Anordnung eingesetzt sind.

9. Einrichtung nach einem oder mehreren der
Ansprüche 1 bis 8,

d a d u r c h   g e k e n n z e i c h n e t ,

daß die Sammelrohre (12, 13) und die Verbindungsrohre
(14, 15) mit abstehenden Lamellen (21, 22) und/oder
Stegen (23), vorzugsweise jeweils mit zwei parallel
zueinander verlaufenden, U-förmig ausgebildeten und
in Richtung der an diese angeschlossenen Absorberprofile offene Lamellen (21, 22) versehen sind.

1o. Einrichtung nach einem oder mehreren der
Ansprüche 1 bis 9,

d a d u r c h   g e k e n n z e i c h n e t ,

daß an die Sammelrohre (12, 13) auf deren Außenseite
eine in Längsrichtung verlaufende plane, vorzugsweise
parallel zu einer Lamelle (22) verlaufende Anlagefläche (24) angeformt ist.

./.

0080208

11. Einrichtung nach Anspruch 1o,

    d a d u r c h   g e k e n n z e i c h n e t ,

    daß die Anlagefläche (24) beidseitig von winkelförmig
    ausgebildeten, vorzugsweise durchgehenden Stegen (25,
    26) begrenzt ist.

12. Einrichtung nach einem oder mehreren der
    Ansprüche 1 bis 11,

    d a d u r c h   g e k e n n z e i c h n e t ,

    daß zum flüssigkeitsdichten Anschließen der Kanäle (31)
    der Absorberprofile  (16) an die Sammelrohre (12, 13)
    jeweils ein in diese einsetzbares, an deren Anlagefläche
    (24) dichtend anliegendes Verbindungsstück (27) vorgesehen ist, das einenAndruckflansch (28) aufweist, der
    in eine durch die winkelförmigen Stege (25, 26) gebildete Nut (39) einführbar ist und die Stege (25, 26) hintergreift.

13. Einrichtung nach Anspruch 12,

    d a d u r c h   g e k e n n z e i c h n e t ,

    daß der Andruckflansch (28) mit in Richtung der Lamellen
    (32, 33, 34, 35, 36) der Absorberprofile  (16) abstehenden Nocken (29) versehen ist, die zur Verdrehsicherung
    der Verbindungsstücke (27) zwischen die Lamellen eingreifen.

14. Einrichtung nach Anspruch 12 oder 13,

    d a d u r c h   g e k e n n z e i c h n e t ,

daß die Absorberprofile (16) axial verschiebbar auf den in deren Kanäle (31) eingreifende Verbindungsstücke (27) gehalten sind und daß zur flüssigkeitsdichten Verbindung in die Verbindungsstücke (27) O-Ring-Dichtungen (3o) eingesetzt sind.

15. Einrichtung nach einem oder mehreren der Ansprüche 1 bis 14,

   d a d u r c h   g e k e n n z e i c h n e t ,

   daß die Absorberprofile (16) verdrehfest mit den Sammelrohren (12, 13) verbunden sind.

16. Einrichtung nach Anspruch 15,

   d a d u r c h   g e k e n n z e i c h n e t ,

   daß die Lamellen (33, 34, 35, 36) der Absorberprofile (16) in an den Sammelrohren (12, 13) angeformte U-förmig gestaltete Lamellen (22) eingreifen und zur verdrehfesten Halterung mit ihren vorzugsweise mit abgewinkelten Stegen (37) versehenen Enden an diesen anliegen.

17. Einrichtung nach einem oder mehreren der Ansprüche 1 bis 16,

   d a d u r c h   g e k e n n z e i c h n e t ,

   daß die Eckanschlußelemente (2o) als symmetrische mit Anschlußstutzen (41,42) versehene Winkelstücke ausgebildet sind, an deren einen Außenseite ein vorzugsweise in Achsrichtung eines Stutzens (41) verlaufendes Anschlußstück (42) zur Verbindung zweier Rahmen (11, 11' bzw. 11', 11'') oder zum Anschluß von Zu- oder Rückführungsleitungen ( 2, 3) angeformt ist.

./.

18. Einrichtung nach einem oder mehreren der
    Ansprüche 1 bis 17,

    d a d u r c h   g e k e n n z e i c h n e t ,

    daß die Sammelrohre (12, 13) und/oder die Verbindungs-
    rohre (13,14,15) formschlüssig mit den Eckanschlußele-
    menten (2o), beispielsweise mittels diese durchgreifen -
    der Stifte (48), mittels Sicken, Verschraubungen od.dgl.
    verbunden sind.

19. Einrichtung nach einem oder mehreren der
    Ansprüche 1 bis 18,

    d a d u r c h   g e k e n n z e i c h n e t ,

    daß die Eckverbindungselemente (2o) an den Enden der
    Stutzen (41, 42) einen abgesetzten, mit einer Ringnut
    (46) versehenen Bund (45) aufweisen, auf den im Querschnitt C-förmig ausgebildete, scheibenförmige Verschlußkappen (18) oder Drosseln (19) aufsetzbar und arretier-
    bar sind.

2o. Einrichtung nach einem oder mehreren der
    Ansprüche  1 bis 19,

    d a d u r c h   g e k e n n z e i c h n e t ,

    daß die Eckanschlußelemente (2o) mittels in deren Stutzen
    (41, 42) eingesetzter O-Ring-Dichtungen (44) flüssigkeitsdicht mit den Sammelrohren (12, 13), den Verbindungsrohren (14, 15) und/oder den Zu- und Rücklaufleitungen
    (2, 3) verbindbar sind.

21. Einrichtung nach einem oder mehreren der
    Ansprüche 1 bis 2o,

    d a d u r c h   g e k e n n z e i c h n e t ,

    daß bei Anordnung der Rahmen (11, 11', 11'') in Form
    eines Zaunes (1) deren unteren Verbindungsrohre (14,
    14', 14'') jeweils auf einer an einem Tragelement (4)
    gehaltenen, vorzugsweise höhenverstellbar befestigten und die Verbindungsrohre ( 14, 14', 14'') seitlich
    umgreifende Konsole (5) abgestützt sind.

22. Einrichtung nach Anspruch 21,

    d a d u r c h   g e k e n n z e i c h n e t ,

    daß zur seitlichen Halterung eines Rahmens (11, 11', 11'')
    an dem Tragelement (4) Führungsplatten (6) angebracht sind,
    durch die jeweils die oberen Eckverbindungselemente (2o)
    seitlich abgestützt sind.

23. Einrichtung nach Anspruch 21 oder 22,

    d a d u r c h   g e k e n n z e i c h n e t ,

    daß in die Verbindungsleitung zweier Rahmen (11, 11'
    bzw. 11', 11'') ein Längenausgleichselement (49) eingesetzt ist, das mit den Anschlußstücken (43) der Eckanschlußelemente (2o) flüssigkeitsdicht verbunden ist.

./.

0080208

24. Einrichtung nach einem oder mehreren der
    Ansprüche 21 bis 23,

    d a d u r c h   g e k e n n z e i c h n e t,

    daß die Zwischenräume zwischen zwei aneinanderstoßender
    Rahmen (11, 11' bzw. 11', 11'') durch eine auf deren
    oberen Verbindungsrohren (15, 15' bzw. 15', 15'') von
    oben aufrastbare oder aufschraubbare U-förmig ausgebildete Abdeckung (51) abgedeckt sind.

A 8768 e-s
16. November 1981

FIG. 1

FIG. 2

0080208

FIG. 3

0080208

FIG. 4

FIG. 5     0080208

FIG. 6

FIG. 7